# EUROPEAN PATENT APPLICATION

(11) **EP 4 842 139 A1**
(43) Date of publication of application: **18.11.2026**
(21) Application number: 24916049.0
(22) Date of filing: 11.01.2024
(51) Int. Cl.: H04W 88/08

(54) **MULTI-AP COORDINATION ESTABLISHMENT METHOD, ACCESS POINT DEVICE, AND COMMUNICATION SYSTEM**

(71) Applicant: Beijing Xiaomi Mobile Software Co., Ltd., Beijing 100085 (CN)
(72) Inventor: CHENG, Yajun, Beijing 100085 (CN)
(74) Representative: Gunzelmann, Rainer
(86) International application number: PCT/CN2024/071892
(87) International publication number: WO 2025/147976

(57) **Abstract**

Embodiments of the present disclosure relate to a multi-AP coordination establishment method, an access point device, and a communication system. The multi-AP coordination establishment method comprises: a first access point device (AP) determining a first radio frame; wherein a multi-AP coordination strategy supported by a first AP is identified in the first radio frame, the multi-AP coordination strategy comprising multi-AP coordination transmission parameters; and sending the first radio frame. In the method, a multi-AP transmission strategy is negotiated and AP coordination transmission is established, thus avoiding problems in multi-AP coordination such as low transmission efficiency and transmission interference that are caused when AP communication cannot be carried out in the multi-AP coordination request transmission SP because of low latency transmission in a BSS where the AP is located or because of other wireless technology interference. The method further increases multi-AP coordination establishment efficiency and accuracy and improves the multi-AP coordination transmission mechanism.

## Description

### TECHNICAL FIELD

The present disclosure relates to the field of communication technology, and specifically to a method for establishing multi-access point (MAP) coordination, an access point (AP), and a communication system.

### BACKGROUND

At present, research subjects of wireless fidelity (Wi-Fi) technology include, for example, ultra high reliability (UHR). A vision of the UHR is to improve a reliability of the wireless local area networks (WLAN) connection, reduce latency, improve manageability, increase throughput at different signal to noise ratio (SNR) levels, and reduce device-level power consumption.

In the UHR, a multi-access point (multiple AP, M-AP or multi-AP) coordination mechanism will be further enhanced to meet the latency requirements of low-latency services.

### SUMMARY

Embodiments of the present disclosure provide a method for establishing multi-access point (MAP) coordination, an access point (AP), and a communication system, so as to provide an enhanced MAP coordination mechanism.

According to a first aspect, the embodiments of the present disclosure provide a method for establishing MAP coordination, including: determining, by a first AP, a first frame, in which the first frame indicates an MAP coordination strategy supported by the first AP, and the MAP coordination strategy includes a parameter for an MAP coordination transmission; and sending the first frame.

According to a second aspect, the embodiments of the present disclosure further provide a method for establishing MAP coordination, including: receiving, by a second AP, a first frame sent by a first AP, in which the first frame indicates an MAP coordination strategy supported by the first AP, and the MAP coordination strategy includes a parameter for an MAP coordination transmission.

According to a third aspect, the embodiments of the present disclosure further provide an AP, being a first AP, including: a determining module, configured to determine a first frame, in which the first frame includes first identification information indicating that the first AP requests to wake up a second AP in a power-saving state so as to transmit uplink data; and a sending module, configured to send the first frame to the second AP.

According to a fourth aspect, the embodiments of the present disclosure further provide an AP, being a second AP, including: a first receiving module, configured to receive a first frame, in which the first frame includes first identification information indicating that a first AP requests to wake up the first AP in a power-saving state so as to transmit uplink data.

According to a fifth aspect, the embodiments of the present disclosure further provide an AP, being a first AP, including: one or more processors, in which the first AP is configured to perform the method for establishing MAP coordination as described in embodiments of the present disclosure.

According to a sixth aspect, the embodiments of the present disclosure further provide an AP, being a second AP, including: one or more processors, in which the second AP is configured to perform the method for establishing MAP coordination as described in embodiments of the present disclosure.

Embodiments of the present disclosure further provide a communication system, including a first AP and a second AP, in which the first AP is configured to implement the method for establishing MAP coordination as described in embodiments of the present disclosure, and the second AP is configured to implement the method for establishing MAP coordination as described in embodiments of the present disclosure.

Embodiments of the present disclosure further provide a storage medium for storing instructions that, when executed on a communication device, cause the communication device to perform the method for establishing MAP coordination as described in embodiments of the present disclosure.

In embodiments of the present disclosure, the first AP and the second AP negotiate the MAP transmission strategy and establish the AP coordination transmission, so as to avoid problems such as low transmission efficiency and transmission interference during the MAP coordination, which is caused when the AP fails to communicate within a service period (SP) requested for the MAP coordination transmission due to a low-latency service transmission in a basic service set (BSS) where the AP is located or interference from other wireless technologies, thus further improving an efficiency and accuracy of MAP coordination establishment and perfecting an MAP coordination transmission mechanism.

Additional aspects and advantages of the embodiments of present disclosure will be given in part in the following descriptions, become apparent in part from the following descriptions, or be learned from the practice of the embodiments of the present disclosure.

### BRIEF DESCRIPTION OF THE DRAWINGS

In order to more clearly illustrate the technical solution in embodiments of the disclosure, the accompanying drawings to be used in the embodiments of the disclosure will be described below. The following drawings are only part embodiments of the present disclosure, and do not constitute a limitation on the protection scope of the present disclosure.
FIG. 1 is an exemplary schematic diagram of an architecture of a communication system according to an embodiment of the present disclosure.
FIG. 2 is an exemplary interaction schematic diagram of a method according to an embodiment of the present disclosure.
FIG. 3 is an exemplary interaction schematic diagram of a method according to another embodiment of the present disclosure.
FIG. 4 is a flow schematic diagram of a method for establishing multi-access point (MAP) coordination according to an embodiment of the present disclosure.
FIG. 5 is a flow schematic diagram of a method for establishing MAP coordination according to another embodiment of the present disclosure.
FIG. 6 is a schematic diagram of a first AP according to an embodiment of the present disclosure.
FIG. 7 is a schematic diagram of a second AP according to an embodiment of the present disclosure.
FIG. 8 is a schematic diagram of a terminal according to an embodiment of the present disclosure.
FIG. 9 is a schematic diagram of a chip according to an embodiment of the present disclosure.

### DETAILED DESCRIPTION

Embodiments of the present disclosure provide a method for establishing MAP coordination, an access point (AP), and a communication system.

According to a first aspect of the embodiments of the present disclosure, a method for establishing MAP coordination is provided, including: determining, by a first AP, a first frame, in which the first frame indicates an MAP coordination strategy supported by the first AP, and the MAP coordination strategy includes a parameter for an MAP coordination transmission; and sending the first frame.

In the above embodiments, the first AP and the second AP negotiate an MAP transmission strategy and establish an AP coordination transmission, so as to avoid problems such as low transmission efficiency and transmission interference during the MAP coordination caused when the AP fails to communicate within a service period (SP) requested for the MAP coordination transmission due to a low-latency service transmission in a basic service set (BSS) where the AP is located or interference from other wireless technologies.

In conjunction with some embodiments of the first aspect, in some embodiments, the first frame includes an MAP coordination element; and the MAP coordination element includes an MAP coordination parameter information list field (MAP Coordination Parameter Info List field); in which the MAP coordination parameter information list field includes one or more MAP coordination strategy subfields, and an MAP coordination strategy subfield corresponds to one type of the MAP coordination strategy.

In the above embodiments, the MAP coordination element is carried in the first frame, and one or more types of the MAP coordination strategy are carried via the MAP coordination element, so as to establish the MAP coordination transmission.

In conjunction with some embodiments of the first aspect, in some embodiments, the MAP coordination strategy subfield includes at least one of: a first identification field (Subelement identifier (ID)), identifying a type of the MAP coordination strategy; a first ID (Immediate), identifying whether the MAP coordination transmission starts after an interval of one inter frame space (IFS) following successful MAP coordination establishment; first identification information (Strategy Delay), identifying that the MAP coordination transmission starts after a delay time indicated by the first identification information following the MAP coordination establishment; or a second ID, identifying whether the MAP coordination transmission successfully established between the first AP and a second AP is a trigger-enabled MAP coordination transmission.

In the above embodiments, the contents of the MAP coordination strategy is further perfected.

In conjunction with some embodiments of the first aspect, in some embodiments, the method further includes at least one of: the first ID being carried in a first information field of the MAP coordination strategy subfield; the first identification information being carried in a second information field of the MAP coordination strategy subfield; or the second ID being carried in a first information field of the MAP coordination strategy subfield.

In the above embodiments, a frame structure of the MAP coordination strategy subfield is perfected to carry more functions to establish the MAP coordination transmission.

In conjunction with some embodiments of the first aspect, in some embodiments, the first frame is an action frame, in which a dialog token field in an action field of the first frame is set to the same value as a dialog token field in an MAP coordination establishment request received by the first AP before sending the first frame, so as to indicate that the first frame serves as a response to the MAP coordination establishment request.

In the above embodiments, the action frame is newly added to establish the MAP coordination transmission.

In conjunction with some embodiments of the first aspect, in some embodiments, sending the first frame includes: sending, by the first AP, the first frame to a second AP in a case where the first AP determines an MAP coordination type supported by the second AP, in which a value of a dialog token field in the first frame is configured to identify a current session.

In the above embodiments, the first AP may also actively initiate the MAP coordination establishment.

In conjunction with some embodiments of the first aspect, in some embodiments, the method further includes: after sending the first frame, receiving a second frame sent by a second AP, in which the second frame indicates that the second AP confirms establishment of the MAP coordination transmission, the second frame is an action frame, and a dialog token field in an action field of the second frame is set to the same value as a dialog token field in the first frame, so as to identify an acknowledgement of the first frame.

According to a second aspect of the embodiments of the present disclosure, a method for establishing MAP coordination is provided, including: receiving, by a second AP, a first frame sent by a first AP, in which the first frame indicates an MAP coordination strategy supported by the first AP, and the MAP coordination strategy includes a parameter for an MAP coordination transmission.

In conjunction with some embodiments of the second aspect, in some embodiments, the first frame includes an MAP coordination parameter information list field; in which the MAP coordination parameter information list field includes one or more MAP coordination strategy subfields, and an MAP coordination strategy subfield corresponds to one type of the MAP coordination strategy.

In conjunction with some embodiments of the second aspect, in some embodiments, the MAP coordination strategy subfield includes at least one of: a first identification field (Subelement ID), identifying a type of the MAP coordination strategy; a first ID (Immediate), identifying whether the MAP coordination transmission starts after an interval of one IFS following successful MAP coordination establishment; first identification information (Strategy Delay), identifying that the MAP coordination transmission starts after a delay time indicated by the first identification information following the MAP coordination establishment; or a second ID, identifying whether the MAP coordination transmission successfully established between the first AP and a second AP is a trigger-enabled MAP coordination transmission.

In conjunction with some embodiments of the second aspect, in some embodiments, the method further includes at least one of: the first ID being carried in a first information field of the MAP coordination strategy subfield; the first identification information being carried in a second information field of the MAP coordination strategy subfield; or the second ID being carried in a first information field of the MAP coordination strategy subfield.

In conjunction with some embodiments of the second aspect, in some embodiments, the first frame is an action frame, in which a dialog token field in an action field of the first frame is set to the same value as a dialog token field in an MAP coordination establishment request received by the first AP before sending the first frame, so as to indicate that the first frame serves as a response to the MAP coordination establishment request.

In conjunction with some embodiments of the second aspect, in some embodiments, the first frame is sent by the first AP to the second AP in a case where the first AP determines an MAP coordination type supported by the second AP, in which a value of a dialog token field in the first frame is configured to identify a current session.

In conjunction with some embodiments of the second aspect, in some embodiments, the method further includes: after receiving the first frame, sending a second frame to the first AP, in which the second frame indicates that the second AP confirms establishment of the MAP coordination transmission, the second frame is an action frame, and a dialog token field in an action field of the second frame is set to the same value as a dialog token field in the first frame, so as to identify an acknowledgement of the first frame.

According to a third aspect of the embodiments of the present disclosure, an AP is provided, which is a first AP, including: at least one of a determining module or a sending module, in which the above first AP is configured to perform the optional implementations of the first aspect.

According to a fourth aspect of the embodiments of the present disclosure, an AP is provided, which is a second AP, including: a first receiving module, in which the above second AP is configured to perform the optional implementations of the second aspect.

According to a fifth aspect of the embodiments of the present disclosure, an AP is provided, which is a first AP, including: one or more processors, in which the first AP is configured to perform the optional implementations of the first aspect.

According to a sixth aspect of the embodiments of the present disclosure, an AP is provided, which is a second AP, including: one or more processors, in which the second AP is configured to perform the optional implementations of the second aspect.

According to a seventh aspect of the embodiments of the present disclosure, a communication system is provided, including a first AP and a second AP, in which the first AP is configured to perform the optional implementations as described in the first aspect, and the second AP is configured to perform the optional implementations as described in the second aspect.

According to an eighth aspect of the embodiments of the present disclosure, a storage medium is provided. The storage medium stores instructions that, when executed on a communication device, cause the communication device to perform the optional implementations as described in the first aspect and the second aspect.

According to a ninth aspect of the embodiments of the present disclosure, a program product is provided that, when executed by a communication device, causes the communication device to perform the methods described in the optional implementations of the first aspect and the second aspect.

According to a tenth aspect of the embodiments of the present disclosure, a computer program is provided that, when executed on a computer, causes the computer to perform the methods described in the optional implementations of the first aspect and the second aspect.

According to an eleventh aspect of the embodiments of the present disclosure, a chip or a chip system is provided, including a processing circuit, configured to perform the methods described in the optional implementations of the first aspect and the second aspect.

The first AP, the second AP, the communication system, the storage medium, the program product, the computer program, and the chip or chip system are all used to perform the methods according to the embodiments of the present disclosure. Therefore, the beneficial effects that may be achieved may be referred to the beneficial effects in the corresponding methods, which will not be repeated here.

Embodiments of the present disclosure provide a method for establishing MAP coordination, an AP, and a communication system. In some embodiments, terms such as the method for establishing MAP coordination, a signal sending method, and a frame sending method may be used interchangeably, and terms such as an information processing system and a communication system may be used interchangeably.

Embodiments of the present disclosure are not exhaustive and only serve as illustrations of some embodiments, but not as specific limitations on the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in the embodiments of the present disclosure are for a purpose of describing specific embodiments only and are not intended to limit the present disclosure.

In the embodiments of the present disclosure, "a plurality of" means two or more.

In some embodiments, the terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, "device" and "apparatus" may be interpreted as either physical or virtual, and their names are not limited to the names recorded in the embodiments. In some cases, "device" and "apparatus" may be understood as "equipment", "device", "circuit", "network element", "node", "function", "unit", "section", "system", "network", "chip", "chip system", "entity", "subject", etc.

In some embodiments, the acquisition of data, information, etc. may comply with laws and regulations of the country to which the data is obtained.

In some embodiments, data, information, etc. may be obtained with consent from users.

In addition, each element, each row, or each column in the table of the embodiments of the disclosure may be implemented as an independent embodiment, and the combination of any elements, any rows, or any columns may also be implemented as an independent embodiment.

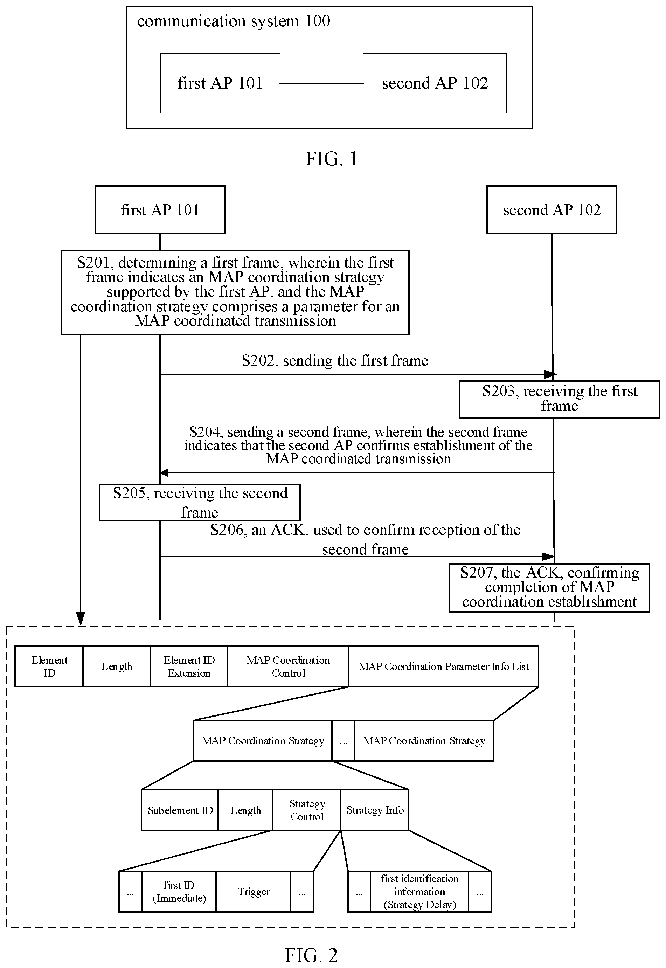

FIG. 1 is a schematic diagram of an architecture of a communication system according to the embodiments of the present disclosure.

As shown in FIG. 1, a communication system 100 includes a first AP 101 and a second AP 102.

In some embodiments, the first AP 101 and the second AP 102 may be APs via which a mobile terminal enters a wired network. An AP is equivalent to a bridge connecting a wired network and a wireless network, and a main function of the AP is to connect various wireless network clients together and then connect the wireless network to Ethernet. Specifically, the AP may be a terminal or a network device with a wireless fidelity (Wi-Fi) chip. In some embodiments, the AP may support a plurality of WLAN standards such as 802.11ax, 802.11be, 802.11ac, 802.11n, 802.11g, 802.11b, 802.11bn, 802.11bf, and 802.11a, and support the next-generation 802.11 protocol, which is not limited herein.

In some embodiments, the communication system 100 further includes a plurality of stations (STAs), and the STA includes, for example, a wireless communication chip supporting a WiFi communication function, a wireless sensor, or a wireless communication terminal. In some embodiments, the wireless communication terminal includes, for example, at least one of a mobile phone, a wearable device, an Internet of Things (IoT) device supporting a WiFi communication function, a car with a WiFi communication function, a smart car, a Pad, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, which is not limited herein.

Specifically, the STA may be a terminal or a network device with a WiFi chip. In some embodiments, the STA may support a plurality of WLAN standards such as 802.11ax, 802.11be, 802.11ac, 802.11n, 802.11g, 802.11b, 802.11bn, 802.11bf, and 802.11a, and support the next-generation 802.11 protocol, which is not limited herein.

In embodiments of the present disclosure, the AP and the STA may be devices supporting a multi-link operation, for example, they may be represented as an AP multi-link device (AP MLD) and a non-AP multi-link device (Non-AP MLD), respectively. The AP MLD may represent an AP supporting a multi-link communication function, and the non-AP MLD may represent an STA supporting a multi-link communication function.

The communication system described in the embodiments of the disclosure aims to more clearly illustrate the technical solutions of the embodiments of the disclosure, and does not constitute a limitation on the technical solutions provided in the embodiments of the disclosure. A person skilled in the art may know that with the evolution of the system architecture and the emergence of new service scenarios, the technical solution provided in the embodiments of the disclosure are also applicable to similar technical problems.

The following embodiments of the present disclosure may be applied to the communication system 100 shown in FIG. 1, or to some entities, but are not limited thereto. Entities in FIG. 1 are illustrative. The communication system may include all or some of the entities in FIG. 1, or may include other entities not shown in FIG. 1. The entities may be in any number and in any form. Each entity may be physical or virtual. Connection relationships between the entities are illustrative. The entities may be unconnected or may be connected. They may be connected in any manner, for example, they may be directly connected or indirectly connected, or may be connected via a wired or wireless way.

Embodiments of the present disclosure may be applied to a wireless local area network (WLAN), for example, a local area network using 802.11 series of protocols. In the WLAN, a BSS is a basic component of the WLAN. A BSS network consists of STAs that have a certain association within a specific coverage area. One scenario of the association is that STAs communicates directly with each other in an ad-hoc network, which is called an independent BSS (IBSS). Another more common scenario is that there is only one central STA dedicated to managing the BSS in the BSS network, which is called an AP, and other STAs in the network are associated with the AP. Other stations in the BSS network that are not the central STA are called terminals, also referred to as non-AP STAs. Terminals and non-AP STAs are collectively referred to as STAs. When describing an STA, there is no need to distinguish between an AP and a non-AP STA. Within a same BSS network, due to a distance, a transmission power, and other reasons, an STA may be unable to detect other STAs located far away therefrom, and the two STAs serve as hidden nodes relative to one another.

FIG. 2 is an interaction diagram of a communication method according to an embodiment of the present disclosure. As shown in FIG. 2, the above method includes the following steps at S201 to S207.

At S201, a first AP 101 determines a first frame, in which the first frame indicates an MAP coordination strategy supported by the first AP, and the MAP coordination strategy includes a parameter for an MAP coordination transmission.

With the development trend of increasing frequency bands and increasing frequency supported by the Wi-Fi device, as well as diversified requirements of communication services, WLAN devices are deployed more and more densely. The increasingly dense APs bring more inter-cell interference and also increase the risk of access collision. In order to further improve user service quality and overall network performance, therefore, while pursuing improvements in communication rate, communication latency, and reliability within a single BSS, the MAP coordination mechanism needs to be further enhanced.

In embodiments of the present disclosure, the first AP 101 determines the first frame, in which the first frame indicates the MAP coordination strategy supported by the first AP, and the MAP coordination strategy includes the parameter for the MAP coordination transmission. In some embodiments, the first AP 101 may be an AP with a coordination capability, and the first AP 101 coordinates its neighbor APs (neighbor APs supporting the MAP coordination, which are exemplified by the second AP 102 in the embodiments of the present disclosure) via an MAP coordination operation (MAPCO), thus achieving coordination transmission modes such as time-frequency resource sharing, spatial reuse, or joint transmission.

The parameter for the MAP coordination transmission include, for example, a coordination strategy type of the MAP coordination transmission (scheduling), a coordination transmission start time, a transmission mode, etc., which are used for one or more second APs 102 to determine whether to establish the MAP coordination transmission with the first AP according to the information; or, when the MAP coordination strategy includes a plurality of strategies, the second AP 102 selects a target MAP coordination strategy according to the second AP 102's own information and joins. In this way, the negotiation and establishment of the MAP coordination transmission among a plurality of APs is achieved by sending the first frame, so as to establish efficient coordination transmission. This is beneficial to avoid problems such as low transmission efficiency and transmission interference in the MAP coordination caused by the AP being unable to communicate within a transmission SP requested for the MAP coordination due to a low-latency service transmission in a BSS where the AP is located or interference from other wireless technologies.

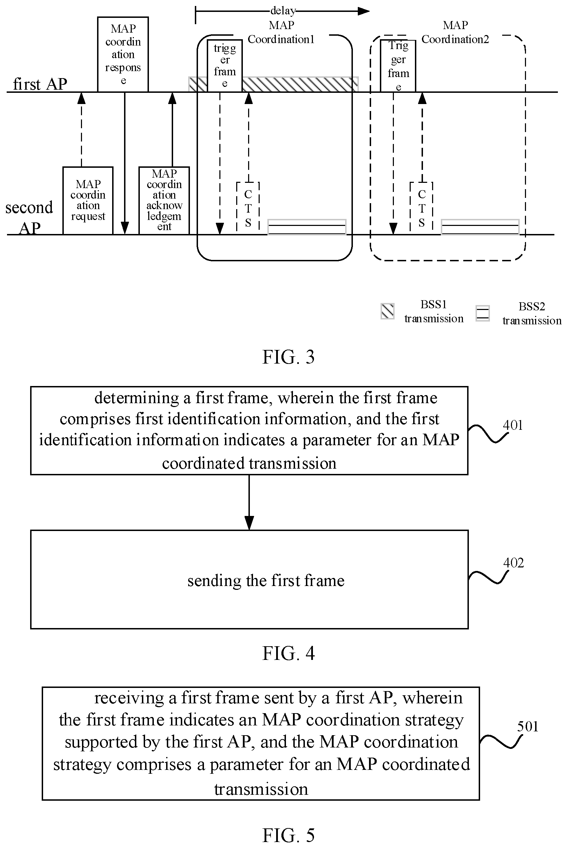

The transmission interference is shown in FIG. 3. When the first AP receives an MAP coordination transmission request from a neighbor AP, an SP of a restricted-target wake time (R-TWT) that is established between the first AP and the STA associated with the AP overlaps with the SP of the MAP coordination transmission requested by the neighbor AP (the second AP). As shown in FIG. 3, in MAP coordination 1, because transmissions of BSS1 and BSS2 exist simultaneously, the first AP may not communicate within an SP of the MAP coordination transmission of the second AP, which causes a certain delay. However, by negotiating the MAP coordination strategy, SP overlap may be avoided, and mutual interference may be avoided.

The first frame may be a newly defined frame or a defined action frame.

At S202, the first AP 101 sends the first frame to the second AP 102.

The first AP 101 sends the first frame to the second AP 102, thus achieving coordination transmission modes such as time-frequency resource sharing, spatial reuse, or joint transmission via the coordination transmission mode.

In embodiments of the present disclosure, the first AP 101 and the second AP 102 negotiate the MAP transmission strategy and establish an AP coordination transmission, so as to avoid problems such as low transmission efficiency and transmission interference during the MAP coordination, which is caused when the AP fails to communicate within an SP requested for the MAP coordination transmission due to a low-latency service transmission in a BSS where the AP is located or interference from other wireless technologies, thus further improving the efficiency and accuracy of MAP coordination establishment and perfecting the MAP coordination transmission mechanism.

At S203, the second AP 102 receives the first frame.

The second AP 102 receives the first frame and establishes the MAP coordination transmission with the first AP according to the MAP coordination strategy supported by the first AP included in the first frame.

In some embodiments, as shown in FIG. 2, the first frame includes an MAP coordination element, and the MAP coordination element includes an MAP coordination parameter information list field, in which the MAP coordination parameter information list field includes one or more MAP coordination strategy subfields. An MAP coordination strategy subfield corresponds to one type of the MAP coordination strategy. Different MAP coordination strategies may correspond to different transmission types, different transmission start times, etc.

In some embodiments, as shown in FIG. 2, the MAP coordination strategy subfield includes at least one of: a first identification field (Subelement ID), a first ID (Immediate), first identification information (Strategy Delay), or a second ID. The first identification field identifies a type of the MAP coordination strategy, for example, each transmission type uniquely corresponds to an ID. The first ID, for example Immediate, identifies whether the MAP coordination transmission starts after an interval of one IFS following successful MAP coordination establishment. For example, the Immediate being set to 1 identifies that the MAP coordination transmission starts immediately after the interval of one IFS following the successful MAP coordination establishment; and the Immediate being set to 0 identifies that the MAP coordination transmission does not start immediately after the interval of one IFS following the successful MAP coordination establishment. For example, after the successful MAP coordination establishment, if the first ID in the first frame is set to 1, the MAP coordination transmission starts after the successful MAP coordination establishment; and if the first ID in the first frame is set to 0, the MAP coordination transmission starts after a time indicated by the first identification information following the successful MAP coordination establishment. The first identification information, for example Strategy Delay, identifies that the MAP coordination transmission starts after a delay time indicated by the first identification information following the MAP coordination establishment. In some embodiments, the first identification information may exist when the Immediate is set to 0; and the first identification information and the Immediate may also exist independently of each other. The second ID identifies whether the MAP coordination transmission successfully established between the first AP and a second AP is a trigger-enabled MAP coordination transmission. For example, the second ID being set to 1 identifies that the MAP coordination transmission is trigger-enabled; and the Immediate being set to 0 identifies that the MAP coordination transmission is not trigger-enabled.

In some embodiments, as shown in FIG. 2, a first information field and a second information field may be newly added in the MAP coordination strategy subfield. The first ID is carried in the first information field of the MAP coordination strategy subfield; the first identification information is carried in the second information field of the MAP coordination strategy subfield; and/or the second ID is carried in the first information field of the MAP coordination strategy subfield.

In some embodiments, the first frame is an action frame, in which a dialog token field in an action field of the first frame is set to the same value as a dialog token field in an MAP coordination establishment request received by the first AP before sending the first frame, so as to indicate that the first frame serves as a response to the MAP coordination establishment request. A dialog token subfield indicates a current session to distinguish it from other sessions.

In some embodiments, sending the first frame includes: sending, by the first AP, the first frame to a second AP in a case where the first AP determines an MAP coordination type supported by the second AP, in which a value of a dialog token field in the first frame is configured to identify a current session.

That is, the first AP knows that the second AP supports a certain MAP coordination type (the first AP may determine the MAP coordination strategy supported by the second AP via information carried in a Beacon frame broadcast by the second AP), and the first AP may also actively send the first frame to the second AP without receiving the MAP coordination request from the second AP. A value of the dialog token field in the first frame is configured to identify the current session.

At S204, the second AP 102 sends a second frame, in which the second frame indicates that the second AP confirms establishment of the MAP coordination transmission, the second frame is an action frame, and a dialog token field in an action field of the second frame is set to the same value as a dialog token field in the first frame, so as to identify an acknowledgement of the first frame.

After receiving the first frame, the second AP sends the second frame to the first AP, in which the second frame is used to confirm the establishment of the MAP coordination transmission. In some embodiments, the second frame may also be the action frame, and the dialog token field in the action field of the second frame is set to the same value as the dialog token field in the first frame, so as to identify the acknowledgement of the first frame.

At S205, the first AP 101 receives the second frame sent by the second AP 102.

At S206, after receiving the second frame, the first AP sends an acknowledgement (ACK) to the second AP to confirm reception of the second frame.

At S207, successful MAP coordination establishment is completed.

After the first AP sending the ACK, it is considered that the successful MAP coordination establishment is completed.

The communication method involved in the embodiments of the present disclosure may include at least one of the above steps and embodiments. For example, S201 may be implemented as an independent embodiment, S202 may be implemented as an independent embodiment, S203 may be implemented as an independent embodiment, S204 may be implemented as an independent embodiment, S205 may be implemented as an independent embodiment, and S206 may be implemented as an independent embodiment; the combination of S201 and S202 may be implemented as an independent embodiment, the combination of S202 and S203 may be implemented as an independent embodiment, the combination of S204 and S205 may be implemented as an independent embodiment, and the combination of S206 and S207 may be implemented as an independent embodiment, which are not limited herein.

In some embodiments, reference may be made to other optional implementations described before or after the description corresponding to FIG. 2.

In some embodiments, names of information are not limited to those specified in the embodiments. The terms such as "information", "message", "signal", "signaling", "report", "configuration", "indication", "instruction", "command", "channel", "parameter", "domain", "field", "symbol", "codepoint", "bit", "data", "program", "chip", etc., may be used interchangeably.

In some embodiments, the terms such as "time point", "time", "time position", etc. may be used interchangeably; and terms such as "period", "time interval", "time window", "window", "time", etc. may be used interchangeably.

In some embodiments, the terms such as "wireless access scheme", "waveform", etc. may be used interchangeably.

In some embodiments, the terms such as "certain", "predetermined", "predetermined", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

In some embodiments, determination or judgment may be performed using a value represented by 1 bit (0 or 1), or using boolean values represented by true or false, or by numerical comparison (e.g., comparison with a predetermined value), which is not limited herein.

In some embodiments, "does not expect to receive" may be interpreted as not receiving on a time-domain resource and/or a frequency-domain resource, or as not performing subsequent processing on received data after receiving the data; and "does not expect to send" may be interpreted as not sending, or as sending but not expecting a receiver to respond to content that is sent.

FIG. 4 is a flow schematic diagram of a communication method according to an embodiment of the present disclosure.

As shown in FIG. 4, the above method may be performed by a first AP 101, and the above method includes the following steps at S401 to S403.

At S401, a first AP determines a first frame, in which the first frame includes first identification information, and the first identification information indicates a parameter for an MAP coordination transmission.

At S402, the first frame is sent.

In embodiments of the present disclosure, the first frame includes an MAP coordination element, and the MAP coordination element includes an MAP coordination parameter information list field, in which the MAP coordination parameter information list field includes one or more MAP coordination strategy subfields, and an MAP coordination strategy subfield corresponds to one type of the MAP coordination strategy.

In embodiments of the present disclosure, the MAP coordination strategy subfield includes at least one of: a first identification field (Subelement ID), identifying a type of the MAP coordination strategy; a first ID (Immediate), identifying whether the MAP coordination transmission starts after an interval of one IFS following successful MAP coordination establishment; first identification information (Strategy Delay), identifying that the MAP coordination transmission starts after a delay time indicated by the first identification information following the MAP coordination establishment; or a second ID, identifying whether the MAP coordination transmission successfully established between the first AP and a second AP is a trigger-enabled MAP coordination transmission.

In embodiments of the present disclosure, the method further includes at least one of: the first ID being carried in a first information field of the MAP coordination strategy subfield; the first identification information being carried in a second information field of the MAP coordination strategy subfield; or the second ID being carried in a first information field of the MAP coordination strategy subfield.

In embodiments of the present disclosure, the first frame is an action frame, in which a dialog token field in an action field of the first frame is set to the same value as a dialog token field in an MAP coordination establishment request received by the first AP before sending the first frame, so as to indicate that the first frame serves as a response to the MAP coordination establishment request.

In embodiments of the present disclosure, sending the first frame includes: sending, by the first AP, the first frame to a second AP in a case where the first AP determines an MAP coordination type supported by the second AP, in which a value of a dialog token field in the first frame is configured to identify a current session.

In embodiments of the present disclosure, after sending the first frame, the method includes S403.

At S403, a second frame sent by a second AP is received, in which the second frame indicates that the second AP confirms establishment of the MAP coordination transmission, the second frame is an action frame, and a dialog token field in an action field of the second frame is set to the same value as a dialog token field in the first frame, so as to identify an acknowledgement of the first frame.

The communication method involved in the embodiments of the present disclosure may include at least one of the above steps and embodiments. For example, S401 may be implemented as an independent embodiment, S402 may be implemented as an independent embodiment, and S403 may be implemented as an independent embodiment; and the combination of S401 and S402 may be implemented as an independent embodiment.

In some embodiments, reference may be made to other optional implementations described before or after the description corresponding to FIG. 4.

FIG. 5 is a second flow schematic diagram of a communication method according to the embodiments of the present disclosure.

As shown in FIG. 5, the above method may be performed by a second AP 102, and the above method includes the following steps at S501 to S502.

At S501, a second AP receives a first frame sent by a first AP, in which the first frame indicates an MAP coordination strategy supported by the first AP, and the MAP coordination strategy includes a parameter for an MAP coordination transmission.

In embodiments of the present disclosure, the first frame includes an MAP coordination element; and the MAP coordination element includes an MAP coordination parameter information list field; in which the MAP coordination parameter information list field includes one or more MAP coordination strategy subfields, and an MAP coordination strategy subfield corresponds to one type of the MAP coordination strategy.

In embodiments of the present disclosure, the MAP coordination strategy subfield includes at least one of: a first identification field (Subelement ID), identifying a type of the MAP coordination strategy; a first ID (Immediate), identifying whether the MAP coordination transmission starts after an interval of one IFS following successful MAP coordination establishment; first identification information (Strategy Delay), identifying that the MAP coordination transmission starts after a delay time indicated by the first identification information following the MAP coordination establishment; or a second ID, identifying whether the MAP coordination transmission successfully established between the first AP and a second AP is a trigger-enabled MAP coordination transmission.

In embodiments of the present disclosure, the method further includes at least one of: the first ID being carried in a first information field of the MAP coordination strategy subfield; the first identification information being carried in a second information field of the MAP coordination strategy subfield; or the second ID being carried in a first information field of the MAP coordination strategy subfield.

In embodiments of the present disclosure, the first frame is an action frame, in which a dialog token field in an action field of the first frame is set to the same value as a dialog token field in an MAP coordination establishment request received by the first AP before sending the first frame, so as to indicate that the first frame is a response to the MAP coordination establishment request.

In embodiments of the present disclosure, the first frame is sent by the first AP to the second AP in a case where the first AP determines an MAP coordination type supported by the second AP, in which a value of a dialog token field in the first frame is configured to identify a current session.

In embodiments of the present disclosure, after receiving the first frame sent by the first AP, the method includes S502.

At S502, a second frame is sent to the first AP, in which the second frame indicates that the second AP confirms establishment of the MAP coordination transmission, the second frame is an action frame, and a dialog token field in an action field of the second frame is set to the same value as a dialog token field in the first frame, so as to identify an acknowledgement of the first frame.

The communication method involved in the embodiments of the present disclosure may include at least one of the above steps and embodiments. For example, S501 may be implemented as an independent embodiment, S502 may be implemented as an independent embodiment; and the combination of S501 and S502 may be implemented as an independent embodiment, which are not limited herein.

In some embodiments, reference may be made to other optional implementations described before or after the description corresponding to FIG. 5.

The embodiments of the present disclosure further provide an apparatus for implementing any one of the above methods. For example, an apparatus is provided, including units or modules for implementing the steps executed by the terminal in any one of the above methods. As another example, another apparatus is provided, including units or modules for implementing the steps executed by a network device (for example, an access network device, a core network function node, a core network device, etc.) in any one of the above methods.

It should be understood that the division of units or modules in the above apparatuses is merely a division of logical functions. In actual implementations, the units or modules may be fully or partially integrated into a single physical entity or may be physically separated. In addition, the units or modules in the apparatus may be implemented in the form of software called by a processor. For example, the apparatus includes a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units or modules are realized by designing logical relationships among components in the circuit. For another example, in another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of software called by the processor, or fully implemented in the form of the hardware circuit, or partially implemented in the form of software called by the processor and the remaining part implemented in the form of the hardware circuit.

In the embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or modules. In addition, the hardware circuit may be designed specifically for artificial intelligence and may be understood as an ASIC, such as a neural network processing unit (NPU), a tensor processing unit (TPU), or a deep learning processing unit (DPU).

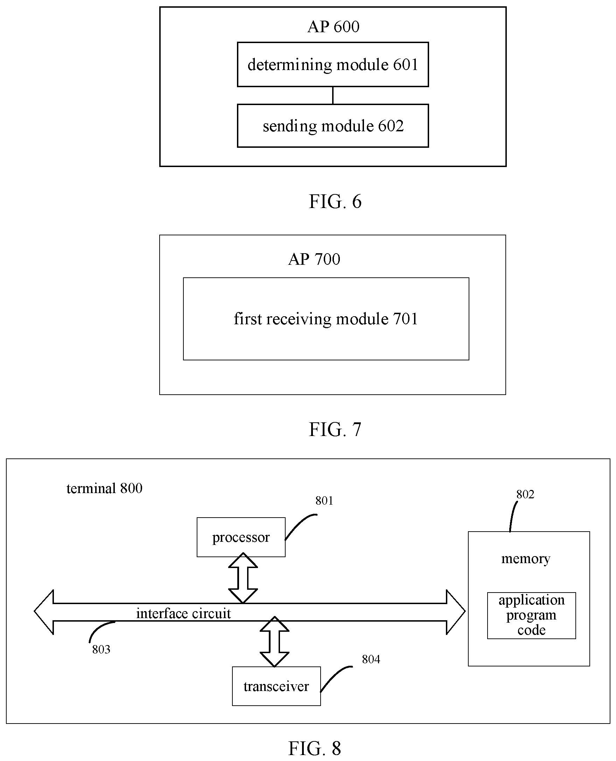

FIG. 6 is a block diagram of a first AP according to the embodiments of the present disclosure. As shown in FIG. 6, the AP is a first AP, and the AP 600 may include at least one of: a determining module 601 or a sending module 602.

In some embodiments, the determining module 601 is configured to determine a first frame, in which the first frame indicates an MAP coordination strategy supported by the first AP, and the MAP coordination strategy includes a parameter for an MAP coordination transmission; and the sending module 602 is configured to send the first frame.

In some embodiments, the determining module 601 is configured to perform at least one of the communication steps performed by the first AP 101 in any one of the above methods (for example, S201 or S401, which is not limited herein), which will not be repeated here. The sending module 602 is configured to perform S202 and S402.

FIG. 7 is a block diagram of an AP according to the embodiments of the present disclosure. As shown in FIG. 7, the AP is a second AP, and the AP 700 may include: a first receiving module 701.

In some embodiments, the first receiving module 701 is configured to receive a first frame sent by a first AP, in which the first frame indicates an MAP coordination strategy supported by the first AP, and the MAP coordination strategy includes a parameter for an MAP coordination transmission.

In some embodiments, the first receiving module 701 is configured to perform at least one of the communication steps performed by the second AP 102 in any one of the above methods (for example, S203 or S501, which is not limited herein), which will not be repeated here.

FIG. 8 is a block diagram of a terminal 800 (for example, user equipment, etc.) according to the embodiments of the present disclosure. The terminal 800 may be a chip, a chip system, or a processor that supports the network device in implementing any one of the above methods, or may be a chip, a chip system, or a processor that supports the terminal in implementing any one of the above methods. The terminal 800 may be used to implement the methods described in the above method embodiments. For details, reference may be made to the description in the above method embodiments.

As shown in FIG. 8, the terminal 800 includes one or more processors 801. The processor 801 may be a general-purpose processor or a dedicated processor, for example, a baseband processor or a central processing unit. The baseband processor may be used to process communication protocols and communication data, and the central processing unit may be used for controlling the communication device (e.g., a base station, a baseband chip, a terminal, a terminal chip, a DU, or a CU), executing programs, and processing data of the programs. The terminal 800 is configured to perform any one of the above methods.

In some embodiments, the terminal 800 further includes one or more memories 802 for storing instructions. In some embodiments, all or part of the memories 802 may also be located outside the terminal 800.

In some embodiments, the terminal 800 further includes one or more transceivers 804. When the terminal 800 includes one or more transceivers 804, the transceiver 804 performs at least one of the communication steps such as sending and/or receiving in the above methods (for example, S202, S203, S204, S205, S206, S402, S403, S501, or S502, which is not limited herein), and the processor 801 performs at least one of the other steps (for example, S201 or S401, which is not limited herein).

In some embodiments, the transceiver may include a receiver and/or a transmitter, which may be separate or integrated. In some embodiments, the terms such as transceiver, transceiver unit, transceiver machine, transceiver circuit, etc. may be used interchangeably; the terms such as transmitter, transmitting unit, transmitter machine, transmitting circuit, etc. may be used interchangeably; and the terms such as receiver, receiving unit, receiver machine, receiving circuit, etc. may be used interchangeably.

In some embodiments, the terminal 800 may include one or more interface circuits 803. In some embodiments, the interface circuit 803 is connected to the memory 802, and the interface circuit 803 may be used to receive signals from the memory 802 or other devices, and may be used to send the signals to the memory 802 or other devices. For example, the interface circuit 803 may read instructions stored in the memory 802 and send the instructions to the processor 801.

The terminal 800 described in the above embodiments may be a communication device such as user equipment, but the scope of the terminal 800 described in the disclosure is not limited thereto, and the structure of the terminal 800 may not be limited by FIG. 8. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

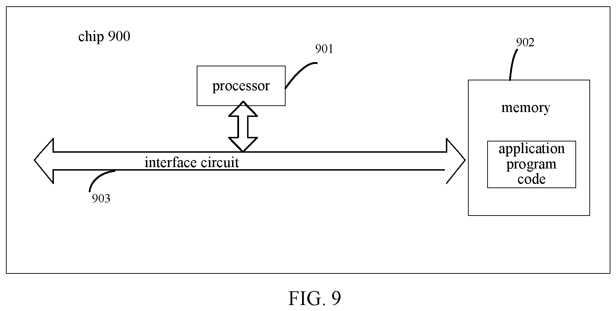

FIG. 9 is a block diagram of a chip 900 according to the embodiments of the present disclosure. For the case where the terminal 800 may be a chip or a chip system, reference may be made to the block diagram of the chip 900 shown in FIG. 9, which is not limited herein.

The chip 900 includes one or more processors 901, and the chip 900 is configured to perform any one of the above methods.

In some embodiments, the chip 900 further includes one or more interface circuits 903. In some embodiments, the interface circuit 903 is connected to the memory 902, and the interface circuit 903 may be used to receive signals from the memory 902 or other devices, and may be used to send the signals to the memory 902 or other devices. For example, the interface circuit 903 may read instructions stored in the memory 902 and send the instructions to the processor 901.

In some embodiments, the interface circuit 903 executes at least one of the communication steps such as sending and/or receiving in the above methods (for example, S202, S203, S204, S205, S206, S402, S403, S501, or S502, which is not limited herein), and the processor 901 executes at least one of the other steps (for example, S201 or S401, which is not limited herein).

In some embodiments, the terms such as interface circuit, interface, transceiver pin, transceiver, etc. may be used interchangeably.

In some embodiments, the chip 900 further includes one or more memories 902 for storing instructions. In some embodiments, all or part of the memories 902 may be located outside the chip 900.

The present disclosure also provides a storage medium for storing instructions. When the instructions are running on the terminal 800, the terminal 800 is caused to perform any one of the above methods. In some embodiments, the storage medium is an electronic storage medium. In some embodiments, the storage medium is a computer-readable storage medium, but is not limited thereto, and it may also be a storage medium readable by other devices. In some embodiments, the storage medium may be a non-transitory storage medium, but is not limited thereto, and it may also be a transitory storage medium.

The present disclosure also provides a program product. When the program product is executed by the terminal 800, the terminal 800 is caused to perform any one of the above methods. In some embodiments, the program product is a computer program product.

The present disclosure also provides a computer program that, when executed on a computer, cause the computer to perform the method of the above method.

## Claims

1. A method for establishing multi-access point (MAP) coordination, comprising:
determining, by a first access point (AP), a first frame, wherein the first frame indicates an MAP coordination strategy supported by the first AP, and the MAP coordination strategy comprises a parameter for an MAP coordination transmission; and
sending the first frame.

2. The method of claim 1, wherein the first frame comprises an MAP coordination element; and
the MAP coordination element comprises an MAP coordination parameter information list field;
wherein the MAP coordination parameter information list field comprises one or more MAP coordination strategy subfields, and an MAP coordination strategy subfield corresponds to one type of the MAP coordination strategy.

3. The method of claim 2, wherein the MAP coordination strategy subfield comprises at least one of:
a first identification field (Subelement identifier (ID)), identifying a type of the MAP coordination strategy;
a first ID (Immediate), identifying whether the MAP coordination transmission starts after an interval of one inter frame space (IFS) following successful MAP coordination establishment;
first identification information (Strategy Delay), identifying that the MAP coordination transmission starts after a delay time indicated by the first identification information following the MAP coordination establishment; or
a second ID, identifying whether the MAP coordination transmission successfully established between the first AP and a second AP is a trigger-enabled MAP coordination transmission.

4. The method of claim 3, further comprising at least one of:
the first ID being carried in a first information field of the MAP coordination strategy subfield;
the first identification information being carried in a second information field of the MAP coordination strategy subfield; or
the second ID being carried in a first information field of the MAP coordination strategy subfield.

5. The method of any one of claims 1 to 4, wherein
the first frame is an action frame,
wherein a dialog token field in an action field of the first frame is set to the same value as a dialog token field in an MAP coordination establishment request received by the first AP before sending the first frame, so as to indicate that the first frame serves as a response to the MAP coordination establishment request.

6. The method of any one of claims 1 to 4, wherein sending the first frame comprises:
sending, by the first AP, the first frame to a second AP in a case where the first AP determines an MAP coordination type supported by the second AP,
wherein a value of a dialog token field in the first frame is configured to identify a current session.

7. The method of any one of claims 1 to 6, further comprising: after sending the first frame, receiving a second frame sent by a second AP, wherein the second frame indicates that the second AP confirms establishment of the MAP coordination transmission, the second frame is an action frame, and a dialog token field in an action field of the second frame is set to the same value as a dialog token field in the first frame, so as to identify an acknowledgement of the first frame.

8. A method for establishing multi-access point (MAP) coordination, comprising:
receiving, by a second access point (AP), a first frame sent by a first AP, wherein the first frame indicates an MAP coordination strategy supported by the first AP, and the MAP coordination strategy comprises a parameter for an MAP coordination transmission.

9. The method of claim 8, wherein the first frame comprises an MAP coordination element; and
the MAP coordination element comprises an MAP coordination parameter information list field;
wherein the MAP coordination parameter information list field comprises one or more MAP coordination strategy subfields, and an MAP coordination strategy subfield corresponds to one type of the MAP coordination strategy.

10. The method of claim 9, wherein the MAP coordination strategy subfield comprises at least one of:
a first identification field (Subelement identifier (ID)), identifying a type of the MAP coordination strategy;
a first ID (Immediate), identifying whether the MAP coordination transmission starts after an interval of one inter frame space (IFS) following successful MAP coordination establishment;
first identification information (Strategy Delay), identifying that the MAP coordination transmission starts after a delay time indicated by the first identification information following the MAP coordination establishment; or
a second ID, identifying whether the MAP coordination transmission successfully established between the first AP and a second AP is a trigger-enabled MAP coordination transmission.

11. The method of claim 10, further comprising at least one of:
the first ID being carried in a first information field of the MAP coordination strategy subfield;
the first identification information being carried in a second information field of the MAP coordination strategy subfield; or
the second ID being carried in a first information field of the MAP coordination strategy subfield.

12. The method of any one of claims 8 to 11, wherein
the first frame is an action frame,
wherein a dialog token field in an action field of the first frame is set to the same value as a dialog token field in an MAP coordination establishment request received by the first AP before sending the first frame, so as to indicate that the first frame serves as a response to the MAP coordination establishment request.

13. The method of any one of claims 8 to 11, wherein the first frame is sent by the first AP to the second AP in a case where the first AP determines an MAP coordination type supported by the second AP,
wherein a value of a dialog token field in the first frame is configured to identify a current session.

14. The method of any one of claims 8 to 13, further comprising: after receiving the first frame,
sending a second frame to the first AP, wherein the second frame indicates that the second AP confirms establishment of the MAP coordination transmission, the second frame is an action frame, and a dialog token field in an action field of the second frame is set to the same value as a dialog token field in the first frame, so as to identify an acknowledgement of the first frame.

15. An access point (AP), being a first AP, comprising:
a determining module, configured to determine a first frame, wherein the first frame comprises first identification information indicating that the first AP requests to wake up a second AP in a power-saving state so as to transmit uplink data; and
a sending module, configured to send the first frame to the second AP.

16. An access point (AP), being a second AP, comprising:
a first receiving module, configured to receive a first frame,
wherein the first frame comprises first identification information indicating that a first AP requests to wake up the first AP in a power-saving state so as to transmit uplink data.

17. An access point (AP), being a first AP, comprising:
one or more processors;
wherein the first AP is configured to perform the method of any one of claims 1 to 7.

18. An access point (AP), being a second AP, comprising:
one or more processors;
wherein the second AP is configured to perform the method of any one of claims 8 to 16.

19. A communication system, comprising a first AP and a second AP, wherein the first AP is configured to implement the method of any one of claims 1 to 7, and the second AP is configured to implement the method of any one of claims 8 to 16.

20. A storage medium for storing instructions that, when executed on a communication device, cause the communication device to perform the method of any one of claims 1 to 7, or the method of any one of claims 8 to 16.
